# EUROPEAN PATENT APPLICATION

(11) **EP 4 617 007 A1**
(43) Date of publication of application: **17.09.2025**
(21) Application number: 24162879.1
(22) Date of filing: 12.03.2024
(51) Int. Cl.: B25J 9/10, B25J 18/00, B25J 18/06

(54) **KINEMATIC DEVICE AND SYSTEM**

(71) Applicant: Airbus Defence and Space GmbH, 82024 Taufkirchen (DE)
(72) Inventor: MANZ, Marc, 82024 Taufkirchen (DE)
(74) Representative: LKGLOBAL Lorenz & Kopf Patentanwalt Attorney at Law PartG mbB

(57) **Abstract**

A kinematic device designed for suspending a load consists of a base element with a base mounting unit, and a top element with a top mounting unit. Connecting these elements is a spring component, which attaches at its base end to the base mounting unit and at its top end to the top mounting unit. The spring generates tension along a motion axis parallel to the base and top elements. Additionally, the device includes a force application component comprising a tensioning element and a force transmission element. The force transmission element connects to the top element and applies a tensile force in the opposite direction to the spring tension force. Also disclosed is a system comprising a plurality of kinematic devices that allows precise control of a top plate's position relative to a base plate.

## Description

The present invention relates to kinematic device and system for suspending a load, particularly for spring-loaded suspension and mechanical actuation to vary a position and/or orientation of a load in spacecraft and rover applications in outer space.

### TECHNICAL BACKGROUND

In contrast to serial robots, parallel kinematic machines (PKM) can comprise one or several closed kinematic loops achieving a higher rigidity due to more limbs connecting a base and an end-effector. This can form the basis for lightweight designs and/or higher payload capacity. Additionally, actuators can be put in the base of the kinematic chain also making the limbs lightweight and therefore fast. These PKMs can have additional singularities and usually have a decreased workspace size. Also, mathematical analysis regarding the kinematics and dynamics can be complex increasing complexity of the control units.

A further alternative are continuum manipulators, in particular having a snake-like continuous structure, which can be used to enter confined, unstructured spaces and provides safe interaction with its environment as they offer a high deformability and adaptability within a lightweight structure. Due to their serial structure and the inherited compliance from their elastomer materials, the continuum robots may have a reduced load-carrying capacity and reduced accuracy. Moreover, compared to a rigid robot, a continuum robot can bend at any point on its body and theoretically has an infinite degree of freedom, which results in complex control modelling. The continuum manipulator can be modeled by a body composed by multiple constant curvature sections, which may result in an oversimplified internal dynamics and external disturbances and thus, might introduce inaccuracies into the kinematic control.

Applications for kinematic manipulators include in orbit servicing which can be realized with tugging operations to transport a satellite to another orbit, refueling and/or repair operations to enable the satellite to remain operational for a longer time. The refueling and repair operation, in particular of uncooperative satellites can rely on kinematic manipulators. For example, fill and drain valves (FDVs) may not be easy to access and the available workspace next to the FDVs can be limited. However, for cooperative satellites with a refueling interface this could be done with a hexapod system as the interface may be easy to reach from a back plane where the launch adapter rings are mounted. The flexibility of serial manipulators and the limited accuracy due to the long distance between first joint encoders and the end effector can lead to a reduced accuracy.

### SUMMARY

It may be seen as an object to provide a kinematic device suitable for the application in a motion platform with improved suspension properties and/or movement capabilities.

According to a first aspect the invention relates to kinematic device for suspending a load comprising a base element comprising a base mounting unit and/or a top element, comprising a top mounting unit. The top element can be disposed at a distance from the base element. The kinematic device can further comprise a spring component having a base end attached to the base mounting unit and/or a top end attached to the top mounting unit.

The spring component can be configured to provide a spring tension force between the base end and the top end, in particular parallel to a motion axis. The motion axis can be defined by a position of the base mounting unit and a position of the top mounting unit.

The system can further comprise a force application component, comprising a tensioning element configured to provide a tensile force, and/or a force transmission element having a first end attached to the top element and a second end connected to the tensioning element in a force-transmitting manner.

The force transmission element can be configured to apply the tensile force antiparallel to the spring tension force at the top mounting unit. Furthermore, the force transmission element can be configured to keep the direction of the tensile force parallel to the motion axis, preferably when the distance between the base element and the top element changes.

Compared to the serial manipulation systems, mechanisms with parallel kinematics realize the advantage of providing an increased acceleration and increased achievable velocities due to a low moving mass and/or high positioning accuracy due to closed kinematics. The kinematic device can also provide benefits in terms of mechatronics and thermal design. Since the entire drive train, i.e. the actuator unit and/or the movement unit, further preferably also including avionics, can be integrated into the base, i.e., disposed or mounted on or near the base plate, they can be very well protected from external impacts and thermal control can also be performed in a centralized manner. Since this kinematic system is configured to keep the mass between base plate and end-effector, i.e., the top plate, low, even fast movements may produce only low dynamic effects on the top plate. The system can substitute rigid bars with flexible elements to achieve fast passive adaptability and thereby low collision forces when interacting with the environment. This can result in reduced damages on both sides, the kinematic system including a potential payload disposed on the top plate and objects or users in the proximity of the system. Furthermore, a compliance at the end-effector is realized which is often desired for robotic contact operations to compensate for inaccuracies and uncertainties.

A docking mechanism can rely on dampers which allow to adjust the stiffness of the mechanism by adjusting the damping mechanism. This compliant configuration can improve the handling of uncertainties of the actual relative position and orientation between both spacecrafts. The usage of a parallel continuum mechanism can provide an inherent flexibility, as it can be adjusted to handle large payloads such as geostationary satellites and it can be folded and stowed in a very compact volume for launch.

The kinematic device can be used in systems for In-Orbit manufacturing where a factory can manufacture a satellite that can then be built in orbit and launched into orbit for operation. On-orbit manufacturing may include fabrication of an antenna, assembly of satellite components, and/or reconfiguration of these components in the factory. The assembly operations may require a positioning tolerance equal to or below 1 mm for specific assembly tasks, e.g., assembly of the antenna structure. A parallel kinematic mechanism can be used to position the elements accurately and work in cooperation with a serial kinematic manipulator which provides the reachability and large workspace for the rest of the operations.

The position control unit can be configured to determine an end-effector pose, i.e., an end plate position based on a relative translation and/or rotation, in particular by means of determining a length of each force transmission element deployed between the respective base element and top element. The position control unit can further be configured to determine forces and/or moments applied to the end-effector, i.e., the top plate. The position control unit can be configured to determine a deformation of a respective spring component, due to the flexibility within the structure.

The system can represent a parallel continuum mechanism that can be applicable in space robotics operation scenarios. The use cases to be considered in the proposed activity include planetary exploration as well as orbital operations. For planetary applications, the drive train, e.g., movement unit, actuator unit and/or tensioning element, can be disposed on the base element or base plate such that an increased shielding against environmental effects can be achieved, i.e. dust and/or radiation protection (solar radiation, cosmic radiation, thermal radiation, etc.). The system can provide low dynamic effects on the carrier platform relevant for in-orbit servicing operations, e.g., when the kinematic system is part of a free-floating carrier platform.

For example, a critical aspect of rover missions can be the thermal design where operating in extremely low temperatures can be required. A central body of the rover can be insulated and/or heated to protect critical subsystems but external appendices such as a serial robotic manipulator pose a more challenging task to efficiently heat. The kinematic device, respectively system, can solve thermal objectives based on the ability for actuator units or movement units to be located within the body of the rover. The active components (tensioning element, actuator unit, movement unit) may also be protected from dust, e.g., regolith dust particles, which can be inherently pernicious to mechanisms.

The kinematic device can provide advantages of known portable continuum manipulators such as inherent flexibility and ability to follow enforced displacements, in particular without the need of active software and tracking systems. Additionally, the kinematic device can provide a variable compliance depending on the use and/ depending on the load applied. In particular, the kinematic device may not be compliant in every situation and/or the compliance of the kinematic device may depend on a force threshold value of an external force applied to the kinematic device. Depending on the preload of the spring component by the force application component, a compliance of the kinematic device can be adjusted. A situational compliance can achieve the advantage that the control algorithm can be less complex and/or can increases the accuracy.

The kinematic device can be used in space applications, preferably to support the positioning of components, in particular as part of in-space manufacturing and/or docking for in-orbit servicing. In addition, it can also be used in a range of planetary scenarios including sample collection for exploration missions, regolith excavation for in-situ resource utilization (ISRU) payloads and/or parts handling for planetary infrastructure manufacturing and building.

The base element can form a structural, in particular a rigid support for the spring component and/or the force application component. Also, the base element can form an attachment point of the kinematic device to mount the kinematic device to a base plate. The base plate can be configured to provide mounting positions for a plurality of kinematic devices. Two kinematic devices can be grouped into a pair and mounted at a predetermined distance from each other on the base plate via the respective base elements. Preferably, the kinematic devices, in particular grouped in pairs, can be mounted on a circular trajectory. Pairs of kinematic devices can be evenly distributed along the circular trajectory. The base element can be formed integral with the base mounting unit.

The top element can comprise a top mounting unit, wherein the top end of the spring component can be configured to fixedly attach to the top mounting unit. Additionally or alternatively, the force application component, specifically the force transmission element can be configured to fixedly attach to the top mounting unit. Preferably, a force applied by the spring component and a force applied by the force application component on the top element cancel out in an equilibrium state of the kinematic device. The combination of force application component and spring component can provide a tensioned connection between the top element and the bottom element.

The spring component can be configured to provide a spring force between the base end and the top end. In particular, the spring component provides the spring force between the base mounting unit and the top mounting unit when the spring component is mounted to the base element and the top element, pushing the base element and the top element away from each other. The spring force can comprise a force component, the spring tension force, which is oriented parallel to a motion axis. The spring tension force can be a first component of the spring force.

The spring component can be configured to continuously apply a force to the base element and a corresponding counter force to the top element. The spring component can comprise at least a spring component section which is formed in an arch like shape with a variable curvature radius, wherein the curvature radius and thereby the distance between the base end and the top end can change to adjust the spring tension force. The spring component can be a leaf spring comprising at least one leaf. The at least one leaf can be oriented such that an inner curved surface faces the force transmission element. The spring component can be a two-dimensional spring having a rectangular shape. The rectangle can preferably have an edge ratio in the range of 2:1 to 50:1. The spring component can be configured to twist to accommodate an angled relative position of the base element with respect to the top element. The twist can be defined by the edges of the short ends of the spring component being angled with respect to one another. Herein in the orientation of the short end edges with respect to one another can be angled in any combination of coordinates x, y, z in a cartesian coordinate system. The spring component can be configured to provide a proportional increase in spring tension force in response to a compression of the spring component, in particular a compression parallel to the motion axis. Correspondingly, the spring component can be configured to provide a proportional decrease in spring tension force in response to an expansion of the spring component, in particular an expansion parallel to the motion axis.

The spring component can comprise any type of suspension element. The spring component achieves the advantage of absorbing shocks to the base element and/or to the top element. The spring component can comprise a shock absorber module configured to absorb and/or dampen an impulse, respectively force applied to the base element and/or top element. The spring component can have a preferred expansion direction in which the spring component expands when the distance between the base element and the top element is reduced.

The motion axis can be defined by a straight line connecting the base element and the top element. Consequently, the motion axis can vary in position and/or orientation according to a relative position of the base element with respect to the top element. The motion axis can intersect the spring component at the base end and/or at the top end. The motion axis can further intersect the force transmission element at the first end and/or at the second end. Preferably, the force transmission element can be oriented along the motion axis. When the force transmission element comprises a string-like element, the motion axis can form a symmetry axis of the string-like element extending from the base element to the top element, respectively from the first end to the second end. The force transmission element can be any type of flexible connection between the base element and the top element. Specifically, the force transmission element can be configured to maintain a distance between the base element and top element independent of the orientation of the base element with respect to the top element. Alternatively, the force transmission element can have a limited flexibility where it is configured flexible along a predetermined direction and inflexible in directions perpendicular to the predetermined direction, e.g., a chain-like structure.

The force application component can be configured to adjust the distance between the base element and the top element. The force application component can tension the spring component by decreasing the distance between the base element and the top element. An additional force, e.g. by a load applied to the top element and/or a collision of the kinematic device with an object, acting on the top element and/or the bottom element can modify the compression state of the spring component such that a distance between the top element and the bottom element, preferably a distance along the motion axis, changes. The force application component can be configured to instantaneously adjust the length of the force transmission element between the base element and the top element such that a force applied to the top element by means of the force transmission element remains constant or adjusts to establish a new force balance taking the added force into account. A new force balance can be established by the force applied by the force application component remains constant and the spring component adjusts the applied force to match the additional force. For example, when a load is applied to the top element the spring component may compress until a correspondingly generated force equals the force generated by the load.

Preferably, the tensioning element can be configured to tension the force transmission element, in particular by applying a constant force to the tensioning element.

An impulse, e.g., generated by an acceleration and/or a collision of the kinematic device, acting on the top element and/or the bottom element can modify the compression state of the spring component such that a distance between the top element and the bottom element, preferably a distance along the motion axis, changes. The force application component can be configured to instantaneously adjust the length of the force transmission element between the base element and the top element such that a force applied to the top element by means of the force transmission element remains constant and/or the force transmission element remains tensioned according to a minimum tension force threshold. The minimum tension force threshold can define a tension force required by the force transmission element to not loose structural integrity, i.e., to collapse in on itself. This can also achieve the advantage that the force transmission element remains tensioned during the absorption of the additional force.

The tensioning element can comprise an active component, i.e., an actuator, configured to provide a force to the force transmission element. For example, the force transmission element can be attached to the tensioning element such that the tensioning element can pull the force transmission element and/or release the force transmission element. Thereby, the tensioning element can apply a force along an extension axis of the force transmission element. The tensioning element can comprise an actuator unit with a retaining element configured to store excess length of the force transmission element. The tensioning element can be configured to continuously apply the tensile force to the force transmission element, in particular also when no power is supplied to the tensioning element. The tensioning element can be configured to instantaneously tension the force transmission element, i.e., keep the tensile force constant, when a length of the force transmission element between the base element and the top element, respectively between the base mounting unit and the top mounting unit, preferably along the motion axis, changes.

The tensioning element can comprise a suspended weight attached to the force transmission element. Advantageously, the suspended weight can be configured to adjust its position to account for a distance change of the base element relative to the top element, preferably along the motion axis. Thereby the force transmission element is continuously tensioned with a constant force based on a pull force generated by the suspended weight. The pull force can be, for example, generated gravitationally and/or centrifugally. Additionally and/or alternatively, the tensioning element can comprise a spring configured to apply an essentially constant force to the force transmission element. This spring can be a type of spring that maintains a constant force regardless of its extension length.

Even when a distance between the top element and the bottom element changes and thereby the force transmission element would lose tension, the tensioning element can be configured to adjust accordingly and keep the force transmission element tensioned with an essentially constant force.

The force transmission element can be a string-like, e.g., a filament, a rope, an eyelet-type chain, bicycle-type chain and/or any combination of the previous. The force transmission element can have an extension direction along which the force transmission element is static, i.e., non-elastic. Thereby, a force applied to the second can directly act on the top end.

Preferably the force transmission element is flexible in at least one dimension, preferably in two dimensions. Thereby, the force transmission element can be flexibly guided between the top element, respective the top mounting unit and the tensioning element. This can also achieve the advantage that the force transmission element can adjust freely to changes of the orientation of the motion axis. Preferably, a section of the force transmission element between the top element and the bottom element can be parallel to the motion axis, more preferably in line with the motion axis.

The force transmission element can be configured to provide an effective tensile force proportional to the tensile force provided by the tensioning element. In particular, a force transmission element guide assembly can comprise at least one mechanical coupling configured to modify the force ratio of the tensile force and the effective tensile force, e.g., a loose roll, fixed roll, pulley, transmission, gears, roll assembly, etc.

The force transmission element can be configured to be coiled with a predetermined radius. Thereby, excess length of the force transmission element can be coiled up and/or released by the tensioning element to maintain an essentially constant tension of the force transmission element. Thereto, the tensioning element, in particular the retaining element, can be configured to coil at least part of the force transmission element.

Generally, the tensioning element can be configured to apply the tensile force to the force transmission element at the point at which the force transmission element extends from the tensioning element, respectively the retaining element. Correspondingly, the section of force transmission element extending from the tensioning element to the top element can be tensioned, in particular constantly tensioned, by the tensioning element.

The force transmission element may cause a reduction in the tensile force applied to the tensioning element and an effective tensile force acting on the top element by means of the thereto attached force transmission element. For example, the force transmission element can be in contact with a guide assembly due to which the effective force can be reduced. Generally, these mounting losses to the tensile force can be considered negligible and a tensile force generated by the tensioning element can be considered to be directly applied to the top element, respectively the top mounting unit. It can be understood that the tensile force is applied to the section of force transmission element extending away from the tensioning element, i.e., when a section of the force transmission element is coiled up, the tensioning element may be configured to apply the tensile force to a section of the force transmission element that is not coiled up, or the tensioning element may be configured to apply the tensile force at the second end, such that the tensile force acts already on the coiled up force transmission element. Thereto, the tensile force can be applied to a section of the force transmission element that is tensioned between the tensioning element and the top element.

The force transmission element can be flexibly designed to follow a positional change of the motion axis, in particular without generating an additional force, i.e., due to bending the force transmission element. For example, a string may follow any positional change of the motion axis, such that the string remains in line with the motion axis.

Generally, the spring component can be configured to push the base element and the top element apart and the force application component can be configured to pull the base element and the top element closer. The force transmission element may define the motion axis along which a force balance between the spring tension force and the tensile force can be established. The base element and the top element can be free to move relative to each other, specifically, any relative translation and/or any relative rotation can be achieved. The spring component and the force application component can be configured to follow this movement and maintain the force balance along the motion axis. Thereto, the motion axis can act as an indicator of the force direction and not necessarily indicate an actual motion of the base element and/or the top element.

Application of the tensile force to the top mounting unit can be achieved by fixedly attaching the first end to the top mounting unit. Preferably, the motion axis intersects the mounting point of the force transmission element at the top mounting unit. A force parallel to the motion axis can generally be directed in the direction from the bottom element to the top element and a force antiparallel to the motion axis can be directed in the direction from the top element to the bottom element.

Keeping the direction of the tensile force parallel to the motion axis can be achieved by a rotatable mounting of the force transmission element at the top mounting unit. Alternatively, the force transmission element can be non-rotatably attached at the top mounting unit and keeping the tensile force parallel can be achieved by a bend of the force transmission element. Herein, an angle between the force transmission element and a mounting surface of the top mounting unit can vary.

According to an embodiment, the tensioning element can be configured to provide the tensile force with a magnitude greater than or equal to a minimum threshold value required to keep the force transmission element tensioned against the spring component. This achieves the advantage that the force transmission element can remain tensioned, in particular when the spring tension force exerted by the spring component changes. The minimum threshold value can vary depending on the type of force transmission element used. The minimum threshold value can also be defined by the spring tension force, such that the minimum threshold value corresponds to a value keeping the distance between the top element and the bottom element constant when no further forces act on the kinematic component and/or when a load supported by the top component remains constant. The minimum threshold value can vary depending on the spring tension force exerted by the spring component. For example, with increasing compression of the spring, the spring tension force can increase. Accordingly, a minimum threshold value required to keep the spring at the new compressed position can be increased. Thereto, tensioning the force transmission element can correspond to counteracting the spring tension force of the spring component. This can achieve the advantage of providing a force balance, respectively to keep the bottom component and the top component at a predetermined distance.

The minimum threshold value can be non-zero so as to prevent a collapse of the force transmission element on itself as the force transmission element would not be tensioned. A force magnitude equal to the spring tension force, may result in a rigid structure that such that an additional load force applied to the top element does essentially not compress the spring component.

The force application component can further be configured to adjust the distance between the base element and the top element along the motion axis. This can be achieved by adjusting a length of the force transmission element between the top element and the base element, i.e., along the motion axis.

According to an embodiment, the base end can be movably connected to the base element and/or the top end can be movably connected to the top element.

The base mounting unit can be configured to rotationally mount, e.g., by means of a cardanic suspension, the base end to provide a rotational mounting of the spring component to the base element. The top mounting unit can be configured to rotationally mount the top end to provide a rotational mounting of the spring component to the top element. The corresponding top and/or bottom rotational mounting can be one-dimensional, preferably two-dimensional, thus providing one rotational degree of freedom, respectively two rotational degrees of freedom. The top mounting unit can provide three rotational degrees of freedom. Preferably, the top mounting unit can comprise a universal joint, e.g., a ball joint, configured to rotationally mount the base end.

In embodiments, where the spring component is a leaf spring, the top mounting unit can be configured to allow the top end of the spring component to rotate along an axis parallel to a short edge of the spring component. The spring component can have a rectangular shape defined by the short edge and a long edge which is longer than the short edge. Further, the top mounting unit can be configured to allow the top end of the spring to rotate along an axis parallel to the long edge. Herein, the rotation axis can be defined by a section of the long edge mounted in or at the top mounting unit.

The top mounting unit can be configured to rotatably mount the spring component with two rotational axes perpendicular to the motion axis. Alternatively, the top mounting unit can be configured to rotatably mount the spring component with three rotational axes.

According to an embodiment, the spring tension force and the tensile force can provide a force balance such that the distance between the base element and the top element remains constant when an additional force is applied to the kinematic device. The additional force can comprise a force component parallel to the motion axis with a magnitude below a predetermined load threshold.

This can achieve the advantage that a sufficiently tensioned combination of spring element and force transmission element can provide a non-compressing platform for a load to be applied. Thus, the kinematic device can be used in a robotic platform as a static element configured to transfer translational movements and/or rotational movements from an actor and/or coupling to a load platform and vice versa. The coupling can provide a translational and/or rotational suspension of the kinematic element. The load can be applied to the bottom element and/or the top element. For example, a device can be placed on the top element as a static load. Additionally or alternatively, the kinematic device can be loaded by means of an acceleration, e.g., an acceleration of a vehicle, specifically a rocket or space craft.

The direction of the force applied to the kinematic device can vary depending on the type of load. For example, a force corresponding to an acceleration or placing a load on the platform can generally be directed from the top element to the bottom element. Alternatively, a deceleration can provide a force contribution in the opposite direction, but still parallel to the motion axis.

The spring component can be configured to change its compression state when an additional force applied to the kinematic device has a force component parallel to the motion axis with a magnitude greater or equal to a predetermined threshold value to provide a dynamic suspension between the base element and the top element.

The compression state of the spring component can be defined as a current tension of the spring. A change of the compression state can be an expansion or a compression. In the example of a spring following Hooke's spring law, i.e., having a spring tension force proportional to a compression, the additional force can cause the spring component to extend, respectively contract, depending on the direction of the exerted additional force. This achieves the advantage that forces exceeding a predetermined threshold can be dynamically buffered, respectively cushioned. Thereby, shocks to the kinematic device can result in a movement of the spring component. Thereby, damage thresholds can be avoided. For example, an excessive force and/or momentum acting on the base element and/or the top element can be absorbed and/or reduced. This can prevent damages to a shock sensitive load disposed at the top element or the base element. Also, damages to the kinematic device can be avoided as the spring absorbs the initial force or momentum by flexibly deforming easing the load on rigid components.

The tensioning element and/or the force transmission element can be configured to adjust a force transmission element length of the force transmission element parallel to the motion axis, in particular when a distance between the base element and the top element changes, preferably to keep the tensile force constant.

The force transmission element length can be a section of the force transmission element disposed between the base element and the top element, preferably between the base mounting unit and the top mounting unit. Any section of the force transmission element between the base element and the top element can be oriented parallel to the motion axis. When the distance between base element and the top element changes, the force transmission element would become untensioned and the tensile force would no longer be fully applied to the top element. To avoid the force transmission element becoming untensioned, the tensioning element can be configured to remove excess length of the force transmission element between the base element and the top element. Preferably, the tensioning element can be configured to store the excess length, preferably while keeping the tensile force constant or adjust the tensile force to match the spring tension force. Thereto the force transmission element can match the behavior of the spring element, i.e., a longer section of the force transmission element can be disposed between the top element and the base element when the spring component expands and a short section of the force transmission element can be disposed between the top element and the base element when the spring component contracts. The force transmission element, respectively the tensioning element can be configured to enforce a static equilibrium by matching the spring tension force.

A distance between the base element and the top element can be defined by a distance along a straight line, preferably the motion axis, between the base element and the top element. The distance can change due to the top element performing a translation and/or rotation with respect to the base element and/or vice versa.

The force transmission element can comprise a flexible element. The flexible element can be configured to adjust the direction of the tensile force to direct at least part of the tensile force parallel to the motion axis. Thereby, the tensioning element can provide the tensile force in a direction not parallel to the motion axis and the force transmission element can be mounted between the top mounting unit and the tensioning element via a suspension element, in particular an idler pulley. Thereby, the force transmission element can extend from the suspension element to the tensioning element in a first direction and from the suspension element to the top mounting unit in a second direction which is angled with respect to the first direction.

The flexible element can be configured to bend according to a specified minimal bending radius. The flexible element can still be non-elastic with respect to the direction in which the tensile force is applied. The force transmission element can be flexible over its complete length or section wise. Preferably, sections if the force transmission element that come in contact with the suspension element, a guide assembly or the retaining element can be flexible to achieve the respective function (directional change, coiling up, etc.).

The tensioning element can comprise an actuator unit configured to store a section of the force transmission element. The actuator unit can further be configured to dispense a stored section of the force transmission element. Depending on the flexibility of the force transmission element, storing of the force transmission element can be achieved by corresponding suitable means. In case of sufficiently high flexibility of the section of the force transmission element to be stored, the force transmission element section can be coiled up. Alternatively, the stored section can be disposed in a storage section.

The actuator unit can be configured to store a sufficient length of the force transmission element to accommodate maximal compression and maximal extension of the spring component. A maximal compression can be defined by the distance between the base element and the top element reaching practically zero, respectively a minimum distance. A minimum compression can be defined by the distance between the base element and the top element reaching a maximum distance, in which the spring may be maximally extended. The minimum and/or maximum distances can also be defined based on elastic deformation limits of the spring element. The actuator unit can be configured to coil up the force transmission element in a slip free manner, i.e., without slippage, to reduce or avoid introducing an elasticity between the tensioning element and the top element.

According to a further embodiment, the actuator unit can be configured to operate in a first mode in which the actuator unit is configured to store a section of the force transmission element when the distance between the base element and the top element decreases. The actuator unit operating in the first mode can also be configured to dispense a section of the force transmission element when the distance between the base element and the top element increases. This can realize a suspension mode of the kinematic device in which the top element can be cushioned with respect to the base element by the spring component.

Additionally, a relative position of the top element with respect to the base element can vary accordingly and the actuator unit can keep the force transmission element slack free and/or not limit an expansion of the spring component. In this first mode the spring element can define the relative movement of the top element with respect to the base element and the force application component can react accordingly.

Although the spring component acts as an active suspension, the force application component may define a direction along which the spring component compresses, respectively expands. In particular, the connection of the top element and the base element via the force transmission element can limit a relative motion of the top element relative to the base element when the spring component expands or compresses. Thereto the force transmission element can form a guide for the spring component.

The first mode can be a default mode which can be performed in the absence of any other functions to be performed by the actuator unit. Alternatively, the first mode can be performed in conjunction with other operating modes. For example, the force application component can be configured to adjust a force transmission element length to adjust a relative position of the top element with respect to the top element. Thereto the actuator unit can be configured to dispense or store a segment of the force transmission element to achieve a corresponding positional change. Should during such a movement an active suspension according to the first mode be required the actuator unit can be configured to overlay the corresponding force transmission element length adjustment with the length adjustment required for the position change. Preferably, the two length adjustments can occur on different time scales, e.g., a movement related adjustment can be slower than a suspension related adjustment or vice versa.

According to a further embodiment, the actuator unit can be configured to operate in a second mode in which the actuator unit can be configured to control a distance between the base element and the top element by adjusting a dispensed length of the force transmission element. This can achieve the advantage that the kinematic device can be used as an active position adjustment component. For example, the kinematic device can form a leg of a Stewart platform or any other robotic application. Based on the pretensioning of the spring component by the force application component the kinematic device can act as a non-compressible rod element, in particular within a predetermined applicable force interval. Advantageously, the kinematic device can act like a suspension element above a force threshold value. The lower the preload of the kinematic device, the greater the force interval can be in which the kinematic device acts like a spring. A stiffness of the kinematic device can be increased by increasing the preload applied to the spring element by increasing the tensile force applied to the force transmission element. A distance between the base element and top element can be reduced accordingly.

By adjusting a dispensed length of the force transmission element, a distance between the top element and the base element, preferably along the motion axis can be varied.

The actuator unit can comprise an encoder configured to determine the actual length of the force transmission element between the tensioning element and the top element, respectively the top mounting unit. The actuator unit can be configured to tension the force transmission element in all situations. Thereby, the encoder can be used to measure the actual length of the force transmission element and thereby the deflection of the spring component.

The actuator unit can be configured to operate in a third mode in which the actuator unit can be configured to control an orientation of the top element relative to the base element by adjusting a direction of the force transmission element. This can achieve the advantage that the kinematic device can be used as an active orientation adjustment component. For example, the kinematic device can form a joint of a robotic arm or any other robotic application. Based on the pretensioning of the spring component by the force application component the kinematic device can act as a non-rotatable rod element, in particular within a predetermined applicable torque interval. Advantageously, the kinematic device can act like a torsion element above a torque threshold value. The lower the preload of the kinematic device, the greater the torque interval can be in which the kinematic device acts like a spring. A rotation angle between the base element and top element can be reduced accordingly.

Furthermore, the actuator unit can be configured to operate in a fourth mode in which the actuator unit can be configured to control a damping coefficient of the spring component by adjusting a damping element coupled to the force transmission element. This can achieve the advantage that the kinematic device can be used as an active damping component. For example, the kinematic device can form a suspension of a Stewart platform or any other robotic application. Based on the pretensioning of the spring component by the force application component the kinematic device can act as a non-dampened rod element, in particular within a predetermined applicable force interval. Advantageously, the kinematic device can act like a dampened spring above a force threshold value. The lower the preload of the kinematic device, the greater the force interval can be in which the kinematic device acts like a spring. A damping coefficient of the kinematic device can be increased by increasing the damping element coupled to the force transmission element. A vertical leaf spring tensioned by a cable-like force transmission element can be seen as an advantageous embodiment of the kinematic device.

According to a further embodiment, the force application component can comprise a dampening element configured to dampen a movement of the force transmission element. The dampening element can be an active component configured to react to a velocity and/or acceleration of the force transmission element. The actuator unit can be configured to control the dampening of the movement of the force transmission element by adjusting the force applied to the force transmission element and/or by limiting the velocity and/or acceleration of the force transmission element. Preferably, the actuator unit can be configured to apply a parameterized dampening of the force transmission element. Dampening parameters can include at least one of:
- velocity of the force transmission element;
- direction of movement of the force transmission element;
- acceleration of the force transmission element;
- duration of movement and/or acceleration of the force transmission element;
- tensional force applied to the force transmission element;

For example, a dampening of the movement can increase the momentary tensile force applied to the force transmission element. The actuator unit can be configured to limit the dampening when a magnitude of the tensile force would exceed a dampening force threshold value. The actuator unit can be configured to apply a selective directional dampening, i.e., to dampen only one direction of movement of the force transmission element. Specifically, the actuator unit can also be configured to apply a dampening to the force transmission elementwhen the distance between the base element and the top element increases. This can achieve the advantage that the spring component can be dampened when a load is abruptly removed from the top element. Thereby, an expansion acceleration and/or velocity can be reduced. Furthermore, dampening the spring in at least one direction, by dampening one direction of movement of the force transmission element, can achieve the advantage of reducing oscillations, respectively resonances of the spring component.

The dampening element can be a passive component configured to dampen a movement of the force transmission element. Preferably, the passive component is configured to apply a one-directional dampening to the force transmission element such that only one direction of movement is dampened. When the spring compresses and an excess section of the force transmission element is coiled up by the actuator unit a dampening may hinder an efficient coiling of the force transmission element. A dampening when the spring component expands can increase stability of the system.

According to a further embodiment, the kinematic device can comprise a guide assembly. The guide assembly can be configured to guide the force transmission element along a predetermined trajectory in a length neutral manner such that a length of the force transmission element parallel to the movement axis remains constant when the orientation of the movement axis changes.

A length-neutral guidance of the force transmission element can allow the force transmission element to maintain a constant tension between the top element and the base element that can move relative to each other. The force transmission element may be linked to the tensioning element configured to adjust the length of the force transmission element according to the movement of the top and base element. The guide assembly can comprise at least one guide element configured to guide the force transmission element. For example, the guide assembly can comprise at least one of a pulley, roller, or other devices that are configured to guide the force transmission element and may prevent the force transmission element from bending, twisting, or sagging.

The guide assembly can enable the force transmission element to control the position and orientation of the top platform relative to the bottom platform. The friction and wear of the force transmission element, the guide assembly and/or the energy consumption of the tensioning element can be reduced, by minimizing changes in the wire length and direction.

Also, the stability, the accuracy and/or safety and reliability of the device can be increased, by avoiding the risk of slackening or snapping of the force transmission element.

The base element can be a fixed or movable element that serves as a base or a reference for the top element. The force transmission element can provide a low bend radius and high tensile strength to transmit tensile forces between the top element and the base element, respectively the tensioning element. The actuator can be configured to adjust the length of the force transmission element by winding or unwinding it on a spool, a drum, or any other mechanism. The guide assembly can be configured to guide the force transmission element along a desired path between the top element and the base element, respectively the tensioning element. A travel-neutral wire guidance can be used in various applications that require the control of the position and orientation of a movable element relative to another element.

According to a further embodiment, the kinematic device can comprise a control unit configured to determine a force transmission element section length stored by the actuator unit to determine a distance between the base element and the top element. This can achieve the advantage that a position of the base element relative to the top element can be determined without any further sensor input. For example, the actuator unit be configured to rotate a coiling axis around which the force transmission element can be coiled up. A position of the force transmission element relative to the rotation axis and a corresponding rotation angle can correspond to a length segment of the force transmission element which is coiled up and represents a respective change in distance between the base element and the top element. The control unit can be configured to determine a rotation angle, number of revolutions of a rotation axis of the actuator unit to determine a segment length stored by the actuator unit. The control unit can further be configured to determine a coil up speed, acceleration and/or coil up length limit of the force transmission element and control the actuator unit according to predetermined limits and/or target values of these parameters.

According to a further embodiment, the base element can comprise a movement unit configured to adjust the position of the base mounting unit. The spring component can be configured to extend or contract along the motion axis and to exert the spring tension force proportional to its displacement from a rest length. The movement unit can comprise a motor and a lever having a first end and a second end, wherein the first end of the lever can be pivotally connected to the base end of the spring component and/or the base mounting unit and the second end of the lever can be connected to a drive element of the motor configured to move the lever, preferably to rotate the lever, to change a position of the base end relative to the motor, respectively to base reference point. The movement unit can comprise a movement control configured to control the movement, preferably the rotation, of the lever and thereby adjust the position of the base end of the spring component. The lever can be configured to amplify or reduce a displacement of the spring component relative to the motion of the motor.

Essentially, in order to generate movements, the motor can drive the lever which is connected to the system of spring component and force application component. The lever can be configured to rotate around a motor axis changing the overall length of the kinematic device. The movement unit can be connected to the base plate with a joint, preferably a cardan joint. The joint can be configured to allow motion in two degrees of freedom. The top plate can be connected to the kinematic unit with a further joint, preferably a ball joint.

The motion component can increase a range of motion and accuracy of the kinematic device due to the lever mechanism acting on the spring element. Furthermore, stability and robustness can be increased when implementing a feedback control, e.g., in the form of a force or torque value feedback, such that a collision or unexpected behavior can be detected by an abnormal increase or decrease in required motor torque and/or an unexpected spring component compression or expansion. The movement unit can achieve enhanced adaptability and versatility of the kinematic device due to the coupling of non-compliant motor arm with a conditional suspension element in form of the preloaded spring component providing variable stiffness and/or damping.

The movement unit can be configured to move the base mounting unit, respectively the base end of the spring component relative to a fixed position, in particular a base plate. The trajectory can be a curved, preferably the base end can follow a circular trajectory.

According to a second aspect the invention relates to a system for positioning of a load. The system can comprise a plurality of kinematic devices according to any one of the preceding embodiments. The system further comprises a base plate and a top plate. The base element of each of the plurality of kinematic devices can be mounted to the base plate and/or the top element of each of the plurality of kinematic devices can be mounted to the top plate. The system can also comprise a position control unit which can be configured to adjust the distance between the base element and the top element of at least one kinematic device of the plurality of kinematic devices along the corresponding motion axis to control a position of the top plate relative to the base plate. The system can form a robotic platform configured to realize plurality of degrees of freedoms corresponding to the number of kinematic devices comprised within the system.

The system provides a configuration for a robotic platform where instead of a rigid kinematics, the connection between base plate and the upper plate is realized with a spring component, e.g., a leaf spring and a force transmission element, e.g., a rope. A main advantage of such a combination is that the force of the spring component is counteracted by the force transmission element and the system appears stiff until the external forces and/or dynamic actuation forces are higher than the preload between spring component and force transmission element.

In a nominal operation, i.e., first mode, the preloading of the spring component and force transmission element may not be exceeded. In this mode, the system can perform like a standard steward platform configuration. In contingency cases such as unexpected collisions with the environment the force will exceed the preload and the system will behave compliant. Robotic applications can benefit from a six degrees of freedom motion system according to the invention. Six degrees of freedom can enable movement of a platform, i.e., top plate, in three-dimensional space. The system can change the position with forward/backward, up/down, and left/right translation in three perpendicular axes along with changes in orientation through rotation about three perpendicular axes (or through pitch, yaw, and roll).

The kinematic devices can be mounted in pairs to a stationary support base, i.e., base plate, and a top plate at a second end. Objects placed on the top plate can be moved in the six degrees of freedom in which a freely suspended body can move (i.e., three linear movements (along the X, Y, and Z axes or with lateral, longitudinal, and vertical movement) and three rotations of pitch, roll, and yaw).

The top plate can be configured in a triangular, six-member truss arrangement where each member is a kinematic device. This design can facilitate effective manipulation of the motion platform with six degrees of freedom. Each member in all of the six truss members can be a non-redundant load path.

The system can relate to a robotic motion platform having a predefined number of degrees of freedom corresponding to the number of kinematic devices comprised within the system. Preferably, the system can relate to a hexapod, in particular a Stewart platform, with tensioned spring elements, which can achieve six degrees of freedom by adjusting the length of six legs connected to a fixed base, i.e., the base plate, and a mobile platform, i.e., the top plate. Each leg can comprise a spring component that can be preloaded to vary its stiffness and length by the force application component. By increasing or decreasing the preload of each spring component, the position and orientation of the mobile platform can be controlled.

The present system with tensioned spring components achieves several advantages over conventional Stewart platforms using linear actuators or hydraulic cylinders as legs. Nevertheless, the kinematic devices can be used in conjunction with hydraulic devices and/or linear actuators to perform a movement of the top plat.

The spring components can store and release energy, which can improve the dynamic performance and efficiency of the system. Furthermore, the spring components can provide passive compliance, which can enhance the robustness and safety of the system in case of external disturbances or collisions. The spring components can also reduce the weight and complexity of the system, as they can reduce the need for additional actuators, sensors, and/or power sources.

The system can achieve an enhanced vibration isolation and/or compensation as the tensioned spring components can isolate and/or compensate the vibration of a payload or limit the transmission of vibrations from the base plate to the top plate. Thereto, the system can be used to stabilize a load from a moving vehicle.

The system can also be used for motion simulation and testing. For example, the system can be configured to simulate flight dynamics of an aircraft or a spacecraft, and/or to test the fatigue and durability of a structure and/or a material.

A workspace and/or a dexterity of the system can be defined by the geometry and the configuration of the base plate and the top plate and/or the range and the stiffness of the spring elements. The kinematics and the dynamics of the system can be nonlinear and coupled. The system can therefore comprise a corresponding nonlinear control mode.

The system can comprise a support element mounted to the base plate and movably connected to the top plate. The support element can be configured to restrict at least one degree of freedom of the top plate. Additionally, the support element can be configured to allow translational and/or rotational movement of the top plate in at least one predetermined degree of freedom. This can achieve the advantage that the system can provide a stable top plate with a reduced number of kinematic devices. Depending on the number of degrees of freedoms required, a support element can be provided instead of a kinematic device. The system can comprise only one kinematic device to provide one predetermined degree of freedom to move the top plate.

The system can comprise a hexapod configuration with six kinematic devices, preferably wherein each kinematic element comprises a rotating a lever at which the respective spring component is mounted. The force transmission element can be configured to limit an expansion of the spring component according to a maximum expansion threshold value. The system can comprise a stable equilibrium state in which the combination of spring component and force application component perform like stiff rods instead of flexible elements.

The system can achieve a reduced stowage volume required for launch due to the compressibility and/or foldability of the components due to the use of elastic and flexible materials. The employed mechanism provides a scalable and adaptable concept for a plurality of applications.

The system can comprise a launch lock component configured to inhibit the spring component from expanding or compressing. The system can be configured to disengage the launch lock component to enable the spring component to adjust. Once the system is in orbit the launch locks can be released and the spring component can deploy the system. Optionally a damper in the pull winding mechanism can limit the deployment speed and reduce oscillations in one direction. In other words, during launch the spring component can be tensioned in a compressed state. During deployment of a load, the spring component can be unlocked.

According to a further embodiment of the system, each of the base elements of the plurality of kinematic devices can be disposed on a circumference of the base plate. Each of the spring components of the plurality of kinematic devices can be curved outwardly with respect to a center of mass of the kinematic system. A pair of kinematic devices can form a coupled pair where the kinematic devices are mounted adjacent to one another. A system comprising six kinematic devices can therefore comprise 3 pairs of kinematic devices. The spring components can extend radially outward with respect to a central axis of the system. Pairs of kinematic devices can be angled towards one another, where the corresponding base elements are spaced apart further than the corresponding top elements. Alternatively, the spring components can be configured to curve inwardly when compressed. The lateral direction of extension when the spring elements compress can be adjusted. In particular the movement component can be configured to adjust an orientation of the spring component. Thus, the spring components can, for example, be rotated to minimize a lateral footprint of the system when compressed.

### BRIEF DESCRIPTION OF THE DRAWINGS

The subject matter will hereinafter be described in conjunction with the following drawing figures, wherein like numerals denote like elements, and wherein:
- Fig. 1: is a schematic representation of the kinematic device system in accordance with an embodiment;
- Fig. 2: is a schematic representation of the kinematic system in accordance with an embodiment;
- Fig. 3A: is a schematic representation of the kinematic system in accordance with an embodiment in a first compression state;
- Fig. 3B: is a schematic representation of the kinematic system in accordance with an embodiment in a second compression state;
- Fig. 3C: is a schematic representation of the kinematic system in accordance with an embodiment in a third compression state;
- Fig. 4A: is a schematic representation of the kinematic system in accordance with an embodiment in the first compression state;
- Fig. 4B: is a schematic representation of the kinematic system in accordance with an embodiment in the second compression state; and
- Fig. 4C: is a schematic representation of the kinematic system in accordance with an embodiment in the second compression state.

### DETAILED DESCRIPTION OF THE DRAWINGS

The following detailed description is merely exemplary in nature and is not intended to limit the invention and uses of the invention. Furthermore, there is no intention to be bound by any theory presented in the preceding background or the following detailed description.

The representations and illustrations in the drawings are schematic and not to scale. Like numerals denote like elements.

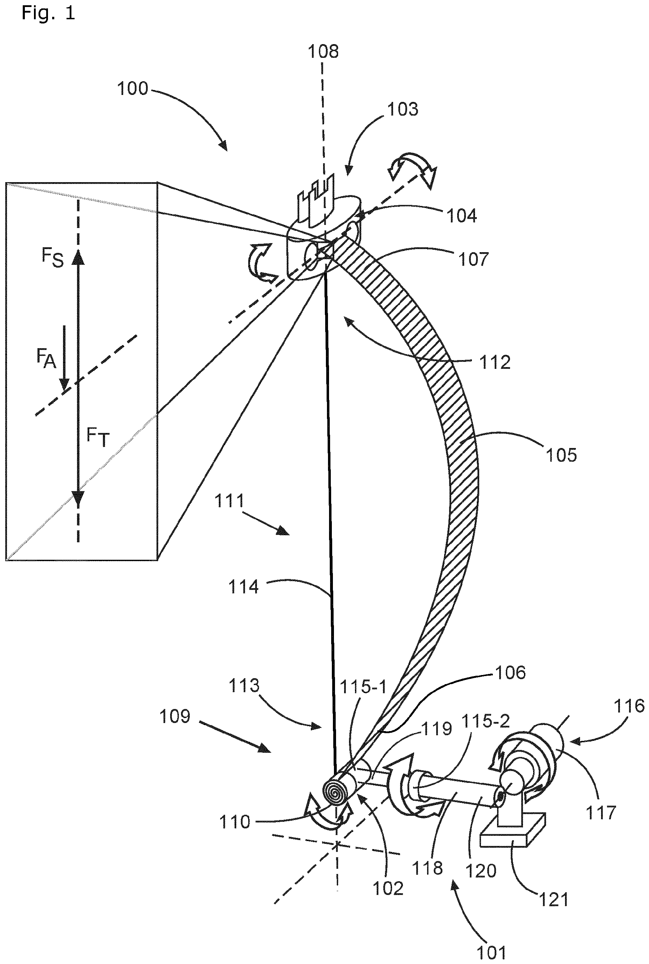

Fig. 1 shows a schematic representation of the kinematic device 100 for suspending a load comprising a base element 101. The base element can form a support structure for the spring component 103. The base element can comprise a base mounting unit 102 to which the spring component 105 and/or the force transmission element 111 can be attached. Preferably, the spring component 105 can be fixedly mounted to the base mounting unit 102. The base mounting unit 102 can clamp the spring component 105 to fixedly attach the spring component to the base element 101. Similarly, the top mounting unit 104can clamp the spring component 105 to fixedly attach the spring component 105 to the top element 103.

The base mounting unit 102 can be configured to rotationally mount the base end 106 to provide a rotational mounting of the spring component 105 to the base element 101. Thereto, the base mounting unit 102 can comprise a first joint 115-1 configured to rotate the base end 106 with respect to a first rotation axis. The base mounting unit 102 can comprise a second joint 115-2 configured to rotate the base end 106 with respect to a second rotation axis. The first rotation axis and/or the second rotation axis can be perpendicular to the motion axis 108. Thereby, the base mounting unit 102 can conform to a displacement of the spring component 105, and a corresponding displacement of the base end 106. For example, when the spring component 105 twists, bends, rotates, compresses, or expands and the base end 106 moves accordingly, the base mounting unit 102 can adjust accordingly. This can achieve an efficient force application in the direction of the motion axis.

Correspondingly, the top mounting unit 104 can be configured to rotationally mount the top end 107 to provide a rotational mounting of the spring component 105 to the top element 103. The corresponding top and/or bottom rotational mounting can be one-dimensional, preferably two-dimensional, thus providing one rotational degree of freedom, respectively two rotational degrees of freedom. More preferably, the bottom mounting can be two-dimensional, e.g., by means of a cardan joint, and the top mounting unit can be three-dimensional, e.g., by means of a universal joint, respectively ball joint.

The base element 101 can comprises a movement unit 116 configured to adjust the position of the base mounting unit 102. The movement unit 116 can comprise a motor and a lever having a distal end 119 and a proximal end 120. The distal end 119 can be pivotally connected to the base end 106 of the spring component 105. The base mounting unit 102 and the proximal end 120 can be connected to a drive element of the motor 117 configured to move the lever 118, preferably to rotate the lever118, to change a position of the base end 106 relative to the motor 117, respectively to base reference point 121. The movement unit 116 can comprise a movement control configured to control the movement, preferably the rotation, of the lever 118 and thereby adjust the position of the base end 106.

The motor 117 can drive the lever 118 which is connected to the system of spring component 105 and force application component 109. The lever 118 can rotate around a motor axis changing the overall length of the kinematic device 100, in particular with reference to the motion axis 108.

The kinematic device 100 comprises a top element 103 having a top mounting unit 104 configured to mount the spring component 105 to the top element 103. The spring component 105 can have a base end 106 attached to the base mounting unit 102 and a top end 107 attached to the top mounting unit 104. The spring component 105 can provide a spring tension force F_{S} between the base end 106 and the top end 107 parallel to a motion axis 108.

The motion axis 108 can intersect the base mounting unit 102 and the top mounting unit 104. A force application component 109 can comprise a tensioning element 110 configured to provide a tensile force F_{T}, and a force transmission element 111 having a first end 112 attached to the top element (103) and a second end 113 connected to the tensioning element 110 in a force-transmitting manner.

The force transmission element 110 can be configured to apply the tensile force F_{T} antiparallel to the spring tension force F_{S} at the top mounting unit 104. The force transmission element 110 can be configured to keep the direction of the tensile force F_{T} parallel to the motion axis 108 when the distance between the base element 101 and the top element 103 changes.

The force transmission element 111 can comprises a flexible element 114 configured to adjust the direction of the tensile force F_{T} to direct at least part of the tensile force F_{T} parallel to the motion axis 108. Preferably the flexible element 114 can form the complete force transmission element 111. Alternatively, sections of the force transmission element not required to bend can be non-flexible.

Each kinematic device of the system can perform like a stiff component as long as forces applied to the respective kinematic device are lower than the preload on the force transmission element, i.e., the lower than the tensile force. The system having a hexapod configuration can be moved with the six actuators in the same way as a permanently stiff hexapod system. When the applied forces exceed the preload value the flexible elements will spring in and the platform, i.e., the top plate, follows the enforced displacement. The force transmission element can be attached to a pull winding mechanism, which can be part of the actuator unit, which can be configured to ensure that the force transmission element will retract when the spring component deflects. An encoder coupled to the tensioning element, e.g., a pull winding mechanism, can be configured to measure the deflection of the spring and thereby calculate the force in the corresponding kinematic device.

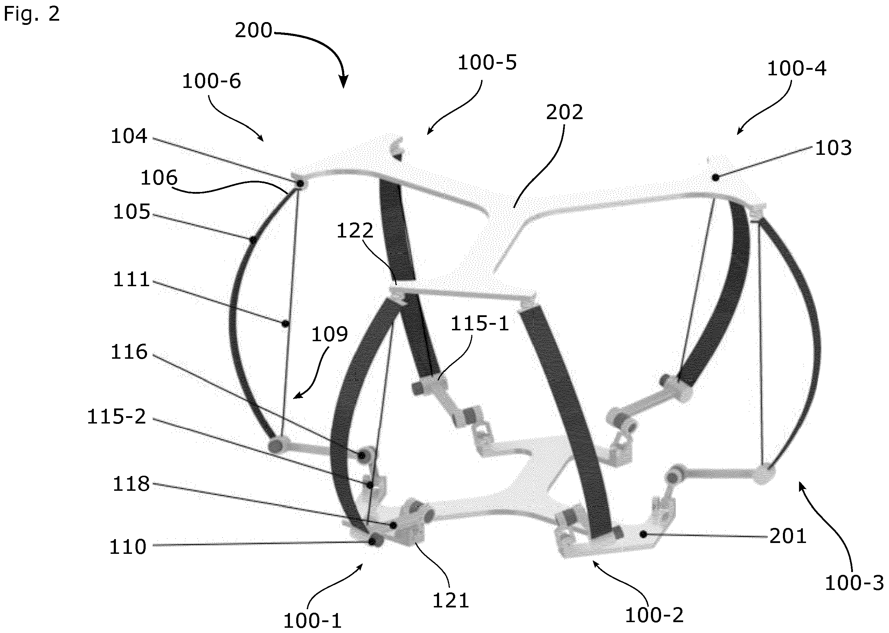

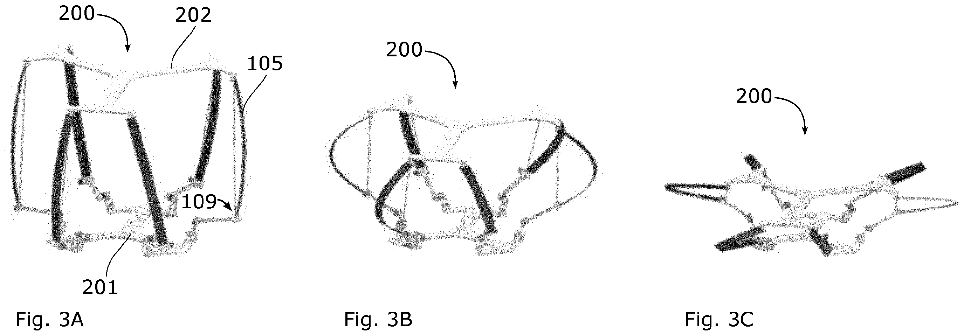

The system 200 as shown in FIGS. 2 and 3A to 3C can assume different compressed configurations. Preferably, the system 200 can be configured to vary continuously between different compressed configurations. The system 200 can be used to stabilize a load during a launch of a rocket.

The top mounting unit 104 can be configured to rotationally mount the top end 106 to provide a rotational mounting of the spring component 105 to the top element 103. The rotational mounting at the top can be a ball joint configured to allow three-dimensional rotation of the top end 106. The system 200 can comprise identical kinematic devices 100-1 to 100-6. Consequently, not all parts of each kinematic device 100 are labelled. Nevertheless, the person skilled in the art will understand, that labels and descriptions applying to one kinematic device 100 are equally applicable to the further kinematic devices 100 of the system 200. Each kinematic device 100 can be attached to predetermined mounting points of the top plate 202 and the base plate 201. Preferably, each kinematic device 100 can be angled towards a corresponding paired kinematic device 100. For example, kinematic devices 100-1 and 100-2, 100-3 and 100-4, and 100-5 and 100-6 can form paired kinematic devices 100.

The second joint 115-2 can be configured to one-dimensionally rotate the movement unit 116, in particular the lever 118 perpendicular to a drive axis of the motor moving the lever 118 base end 106 with respect to a second rotation axis. The lever 116 can be connected to the combination of spring component 105 and force transmission element 101 by means of the first joint 115-1.

This can form a two-element translation unit. The distance between the base reference point 121 and a top reference point 122 can be controlled by the movement unit 116 and also by extending or compressing the spring component 105 by means of the force application component 109. The top plate 202 and the bottom plate 201 can have a three-legged configuration. Paired kinematic devices 100 can be connected to common top leg and to separate bottom legs. Thereby, the distance between bottom mounting units of paired kinematic devices 100 can be larger than a distance of top mounting units of the paired kinematic devices 100.

The system shown in Fig. 3A to 3C corresponds to the embodiment of the system as shown in Fig. 2. The system incorporates a classical hexapod configuration with six kinematic devices each having a rotating a lever at which a corresponding suspension comprising the spring component 105 and force application component 109 which limits the expansion at a predetermined distance, e.g., at 900mm. In this position the system can be in a stable equilibrium and may behave like a classical hexapod with stiff rods instead of flexible elements. This behavior is shown as long as the forces are lower than the preload on the force transmission element. The system 200 can be moved with the six actuators as every stiff hexapod system. If the forces exceed a preload value, the spring components will compress, and the platform may follow the enforced displacement. The force transmission element of the force application component can be attached to an actuator unit configured to wind up the force transmission element when the spring component compresses. This can ensure that the force transmission element will be retracted when the spring component deflects. With an encoder at this actuator unit, it is possible to measure the deflection of the spring and thereby calculate the force in this drive chain.

Fig. 3B shows a compression state at 500 mm and Fig. 3C shows a compression state of 100 mm. The distances can correspond to the distance of the base plate 202 to the top plate 201. The spring components can be compressed symmetrically such that the base plate and top plate are parallel to one another. Depending on the compression state the spring components 105 can have different orientations.

An expansion of the spring component can be limited by dampening the force transmission element to allow for a controlled movement, preferably with lower accelerations and/or forces applied to the load in comparison to spring tension forces of an unrestricted expansion of the spring component.

The kinematic device can be tensioned such that the expected forces to the kinematic device during launch are below a suspension threshold value. This can achieve the advantage of not requiring a launch lock component as the kinematic device may not compress or expand during launch.

The kinematic device can achieve a high stiffness and accuracy for positioning tasks, such as positioning a payload in orbit. Furthermore, the kinematic device can provide Inherent flexibility for contingency situations, i.e., unforeseen interactions. For example, the system can be stiff to offer precise positioning when applied forces to the kinematic device are below the suspension threshold value. In addition, the kinematic device can function as a suspension when the suspension threshold value is exceeded to reduce or prevent damages to the kinematic device, a load suspended by the kinematic device and/or a system comprising the kinematic devices. Actions that may cause the system to trigger the suspension mode may be collisions with rocks, astronauts and/or other objects, and/or any irregular accelerations (e.g., increased launch or reentry forces, increased positional drive forces, etc.).

The actuator unit can be disposed at the base element. Referring to the system, the actuator unit can be disposed at or near base plate. This can achieve the advantage to increase protection of the actuator unit from environmental factors, e.g., radiation, dust, etc.

The stiff behavior of the kinematic device 100 can decrease the complexity of the control, in particular in comparison to completely flexible robotic applications. The kinematic device can provide a predefined range of parameters, in particular a predefined torques when the spring component 105 deflects, providing a predictable and well controllable motion element. Additionally, decoupling of the actuation and the flexible elements can provide the same stiffness in static, i.e., non-compression, applications.

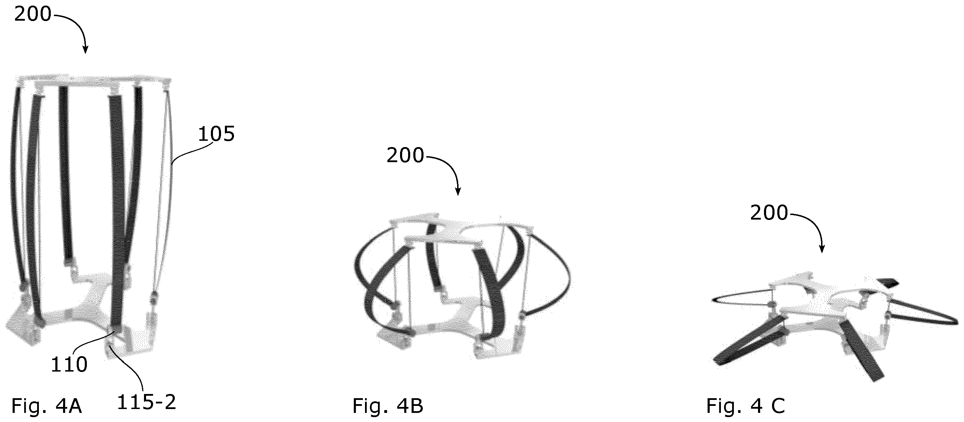

FIGS. 4A to 4C show an embodiment of the system 200 without a corresponding movement unit. The compression distance corresponds to the distances shown inf FIGS. 3A to 3C. Thus, FIG. 4A shows a compression distance of 900 mm, FIG. 4B shows a compression distance of 500 mm and Fig. 4C shows a compression distance of 100 mm. Each kinematic device 100 can comprise an actuator unit for unrolling of the force transmission element. Thereby, the spring component can perform an unfolding motion that can be actively controlled by the amount, speed and/or acceleration of providing the force transmission element from the actuator unit to extend between the base element and the top element. By omitting a movement unit, a larger workspace, i.e., a greater reaching distance or extension of the top element with respect to the base element can be realized. The stiffness of the spring component can vary based on the extension.

Each kinematic device can be cardanically mounted to the base plate, e.g., by means of a cardan joint, and fully rotationally mounted to the top plate, e.g., by means of a universal joint. The force application component, preferably the tensioning element 110 can be directly mounted to the bottom cardanic joint, i.e., the second joint 115-2. Each second joint can be oriented parallel to an edge of the hexagonal base shape of the base plate 201. Thus, the second joint 115-2 can be configured to tilt the spring component 105 essentially parallel to the respective edge of the hexagonal base plate.

### LIST OF REFERENCE SIGNS

- 100: kinematic device
- 101: base element
- 102: base mounting unit
- 103: top element
- 104: top mounting unit
- 105: spring component
- 106: base end
- 107: top end
- 108: motion axis
- 109: force application component
- 110: tensioning element
- 111: force transmission element
- 112: first end
- 113: second end
- 114: flexible element
- 115-1: first joint
- 115-2: second joint
- 116: movement unit
- 117: motor
- 118: lever
- 119: distal end
- 120: proximal end
- 121: base reference point
- 122: top reference point
- 200: kinematic system
- 201: base plate
- 202: top plate

## Claims

1. Kinematic device (100) for suspending a load comprising:
a base element (101) comprising a base mounting unit (102)
a top element (103), comprising a top mounting unit (104),
a spring component (105) having
a base end (106) attached to the base mounting unit (102) and a top end (107) attached to the top mounting unit (104), wherein the spring component (105) is configured to provide a spring tension force (F_{S}) between the base end (106) and the top end (107) parallel to a motion axis (108), wherein the motion axis (108) is defined by a position of the base mounting unit (102) and a position of the top mounting unit (104);
a force application component (109), comprising a tensioning element (110) configured to provide a tensile force (F_{T}), and a force transmission element (111) having a first end (112) attached to the top element (103) and a second end (113) connected to the tensioning element (110) in a force-transmitting manner,
wherein the force transmission element (110) is configured to apply the tensile force (F_{T}) antiparallel to the spring tension force (F_{S}) at the top mounting unit (104), and
wherein the force transmission element (110) is configured to keep the direction of the tensile force (F_{T}) parallel to the motion axis (108) when the distance between the base element (101) and the top element (103) changes.

2. Kinematic device (100) according to claim 1, wherein the tensioning element (110) is configured to provide the tensile force (F_{T}) with a magnitude greater than or equal to a minimum threshold value required to keep the force transmission element (111) tensioned against the spring component (105).

3. Kinematic device (100) according to any one of the preceding claims, wherein
the spring tension force (F_{S}) and the tensile force (F_{T}) provide a force balance such that the distance between the base element (101) and the top element (103) remains constant when an additional force (F_{A}) is applied to the kinematic device (100),
wherein the additional force (F_{A})comprises a force component parallel to the motion axis (108) with a magnitude below a predetermined load threshold.

4. Kinematic device (100) according to any one of the preceding claims, wherein
the spring component (105) is configured to change its compression state when the additional force (F_{A}) applied to the kinematic device (100) has a force component parallel to the motion axis (108) with a magnitude greater or equal to a predetermined threshold value to provide a dynamic suspension between the base element (101) and the top element (103).

5. Kinematic device (100) according to any one of the preceding claims, wherein
the tensioning element (110) is configured to adjust a force transmission element length of the force transmission element (111) parallel to the motion axis (108) when a distance between the base element (101) and the top element (103) changes to keep the tensile force (F_{T}) constant.

6. Kinematic device (100) according to any one of the preceding claims, wherein
the force transmission element (111) comprises a flexible element (114) configured to adjust the direction of the tensile force (F_{T}) to direct at least part of the tensile force (F_{T}) parallel to the motion axis (108).

7. Kinematic device (100) according to any one of the preceding claims, wherein
the tensioning element (110) comprises an actuator unit
configured to store a section of the force transmission element (111), and
configured to dispense a stored section of the force transmission element (111).

8. Kinematic device (100) according to any one of the preceding claims, wherein
the actuator unit is configured to operate in a first mode in which the actuator unit is configured to store a section of the force transmission element (111) when the distance between the base element (101) and the top element (103) decreases, and
configured to dispense a section of the force transmission element (111)when the distance between the base element (101) and the top element (103) increases.

9. Kinematic device (100) according to any one of the preceding claims, wherein
the actuator unit is configured to operate in a second mode in which the actuator unit is configured to control a distance between the base element (101) and the top element (103) by adjusting a dispensed length of the force transmission element (111).

10. Kinematic device (100) according to any of the preceding claims, wherein the force application component (109) comprises a dampening element configured to dampen a movement of the force transmission element (111).

11. Kinematic device (100) according to any one of the preceding claims,
comprising a guide assembly configured to guide the force transmission element (111) along a predetermined trajectory in a length neutral manner such that a length of the force transmission element (111) parallel to the movement axis (108) remains constant when the orientation of the movement axis (108) changes.

12. Kinematic device according to claim 7, comprising a control unit configured to determine a force transmission element (111) section length stored by the actuator unit to determine a distance between the base element (101) and the top element (103).

13. Kinematic device (100) according to any one of the preceding claims, wherein the base element (101) comprises a movement unit (116) configured to adjust the position of the base mounting unit.

14. Kinematic system (200) for positioning of a load comprising:
a plurality of kinematic device (100) according to any one of claims 1 - 13,
a base plate (201) and a top plate (202),
wherein the base element (101) of each of the plurality of kinematic devices (100) is mounted to the base plate (201) and the top element (103) of each of the plurality of kinematic devices (100) is mounted to the top plate (202), and
a position control unit configured to adjust the distance between the base element (101) and the top element (103) of at least one kinematic device (100) of the plurality of kinematic devices (100) along the corresponding motion axis (108) to control a position of the top plate (202) relative to the base plate (201).

15. Kinematic system (200) for positioning of a load, wherein each of the base elements (101) of the plurality of kinematic devices (100) is disposed on a circumference of the base plate (201) and wherein each of the spring components (105) of the plurality of kinematic devices (100) is curved outwardly with respect to a center of mass of the kinematic system.

## Amended claims

### Amended claims in accordance with Rule 137(2) EPC.

1. Kinematic device (100) for suspending a load comprising:
a base element (101) comprising a base mounting unit (102) a top element (103), comprising a top mounting unit (104),
a spring component (105) having
a base end (106) attached to the base mounting unit (102) and a top end (107) attached to the top mounting unit (104), wherein the spring component (105) is configured to provide a spring tension force (F_{S}) between the base end (106) and the top end (107) parallel to a motion axis (108), wherein the motion axis (108) is defined by a position of the base mounting unit (102) and a position of the top mounting unit (104);
a force application component (109), comprising a tensioning element (110) configured to provide a tensile force (F_{T}), and a force transmission element (111) having a first end (112) attached to the top element (103) and a second end (113) connected to the tensioning element (110) in a force-transmitting manner,
wherein the force transmission element (111) is configured to apply the tensile force (F_{T}) antiparallel to the spring tension force (F_{S}) at the top mounting unit (104), and
wherein the force transmission element (111) is configured to keep the direction of the tensile force (F_{T}) parallel to the motion axis (108) when the distance between the base element (101) and the top element (103) changes
wherein the motion axis (108) varies in orientation according to a relative position of the base element (101) with respect to the top element (103); and wherein the base element (101) and the top element (103) are free to move relative to each other to achieve any relative translation and any relative rotation.

2. Kinematic device (100) according to claim 1, wherein the tensioning element (110) is configured to provide the tensile force (F_{T}) with a magnitude greater than or equal to a minimum threshold value required to keep the force transmission element (111) tensioned against the spring component (105).

3. Kinematic device (100) according to any one of the preceding claims, wherein the spring tension force (F_{S}) and the tensile force (F_{T}) provide a force balance such that the distance between the base element (101) and the top element (103) remains constant when an additional force (F_{A}) is applied to the kinematic device (100), wherein the additional force (F_{A})comprises a force component parallel to the motion axis (108) with a magnitude below a predetermined load threshold.

4. Kinematic device (100) according to any one of the preceding claims, wherein the spring component (105) is configured to change its compression state when the additional force (F_{A}) applied to the kinematic device (100) has a force component parallel to the motion axis (108) with a magnitude greater or equal to a predetermined threshold value to provide a dynamic suspension between the base element (101) and the top element (103).

5. Kinematic device (100) according to any one of the preceding claims, wherein the tensioning element (110) is configured to adjust a force transmission element length of the force transmission element (111) parallel to the motion axis (108) when a distance between the base element (101) and the top element (103) changes to keep the tensile force (F_{T}) constant.

6. Kinematic device (100) according to any one of the preceding claims, wherein the force transmission element (111) comprises a flexible element (114) configured to adjust the direction of the tensile force (F_{T}) to direct at least part of the tensile force (F_{T}) parallel to the motion axis (108).

7. Kinematic device (100) according to any one of the preceding claims, wherein the tensioning element (110) comprises an actuator unit
configured to store a section of the force transmission element (111), and configured to dispense a stored section of the force transmission element (111).

8. Kinematic device (100) according to claim 7, wherein the actuator unit is configured to operate in a first mode in which the actuator unit is configured to store a section of the force transmission element (111) when the distance between the base element (101) and the top element (103) decreases, and configured to dispense a section of the force transmission element (111) when the distance between the base element (101) and the top element (103) increases.

9. Kinematic device (100) according to any one of claims 7 and 8, wherein the actuator unit is configured to operate in a second mode in which the actuator unit is configured to control a distance between the base element (101) and the top element (103) by adjusting a dispensed length of the force transmission element (111).

10. Kinematic device (100) according to any of the preceding claims, wherein the force application component (109) comprises a dampening element configured to dampen a movement of the force transmission element (111).

11. Kinematic device (100) according to any one of the preceding claims, comprising a guide assembly configured to guide the force transmission element (111) along a predetermined trajectory in a length neutral manner such that a length of the force transmission element (111) parallel to the movement axis (108) remains constant when the orientation of the movement axis (108) changes.

12. Kinematic device according to claim 7, comprising a control unit configured to determine a force transmission element (111) section length stored by the actuator unit to determine a distance between the base element (101) and the top element (103).

13. Kinematic device (100) according to any one of the preceding claims, wherein the base element (101) comprises a movement unit (116) configured to adjust the position of the base mounting unit.

14. Kinematic system (200) for positioning of a load comprising:
a plurality of kinematic device (100) according to any one of claims 1 - 13,
a base plate (201) and a top plate (202), wherein the base element (101) of each of the plurality of kinematic devices (100) is mounted to the base plate (201) and the top element (103) of each of the plurality of kinematic devices (100) is mounted to the top plate (202), and
a position control unit configured to adjust the distance between the base element (101) and the top element (103) of at least one kinematic device (100) of the plurality of kinematic devices (100) along the corresponding motion axis (108) to control a position of the top plate (202) relative to the base plate (201).

15. Kinematic system (200) for positioning of a load, wherein each of the base elements (101) of the plurality of kinematic devices (100) is disposed on a circumference of the base plate (201) and wherein each of the spring components (105) of the plurality of kinematic devices (100) is curved outwardly with respect to a center of mass of the kinematic system.
